(19) **Europäisches Patentamt**

**European Patent Office**

**Office européen des brevets**

(11) **EP 1 095 480 B1**

(12) **EUROPEAN PATENT SPECIFICATION**

(45) Date of publication and mention
of the grant of the patent:
**27.07.2005 Bulletin 2005/30**

(51) Int Cl.⁷: **H04L 1/24**, H04L 27/26,
H04M 11/06

(21) Application number: **00928787.1**

(86) International application number:
**PCT/US2000/012064**

(22) Date of filing: **03.05.2000**

(87) International publication number:
**WO 2000/067419 (09.11.2000 Gazette 2000/45)**

(54) **ADSL TEST SYSTEM**

ADSL TEST SYSTEM

SYSTEME DE TEST POUR ADSL

(84) Designated Contracting States:
**DE FR GB SE**

(30) Priority: **03.05.1999 US 132217 P**

(43) Date of publication of application:
**02.05.2001 Bulletin 2001/18**

(73) Proprietor: **TERADYNE, INC.**
**Boston, Massachusetts 02118 (US)**

(72) Inventor: **BABAYAN, Bel-balydin**
**Clayton, CA 94517 (US)**

(74) Representative:
**Luckhurst, Anthony Henry William**
**Marks & Clerk**
**90 Long Acre**
**London WC2E 9RA (GB)**

(56) References cited:
**WO-A-99/18701**          **US-A- 4 273 970**

EP 1 095 480 B1

Printed by Jouve, 75001 PARIS (FR)

## Description

### FIELD OF THE INVENTION

This invention relates generally to test systems for communication systems and more particularly to systems for testing circuits and systems which include asymmetric digital subscriber loop modems.

### BACKGROUND OF THE INVENTION

As is known in the art, Asymmetric Digital Subscriber Loop (ADSL) modems operate by converting digital data into analog domain signals using a variety of modulation techniques.

As is also known, one type of modulation technique is referred to as Discrete Multi Tone (DMT) ADSL. The DMT ADSL modem encoding technique makes it theoretically possible to transmit data up to 15 Mbs (mega-bits-per-second) over standard gauge twisted pair telephone lines. A DMT ADSL modem converts digital data to analog data and vice versa. In ADSL modems, detection of the signal coding of the analog stream while operating well below performance maximums is achieved using well-known Digital Signal Processing (DSP) techniques. The fundamental limitations of DMT ADSL technology are those imposed by the analog processing which is accomplished via analog circuits.

The analog circuits in question are provided from the analog I/O sections of both modems (send and receive), and the network electrical properties of the telephone line connecting them. A DMT modem includes over 200 individual single-carrier modems spread out over a 1.1 MHz frequency bandwidth. Because of the relatively wide bandwidth, one limitation of a DMT modem is non-linearity or distortion in the analog front end (AFE).

The AFE circuit is made up of amplifiers, receivers and other circuitry that drive and receive the analog signals. Non-linearity and distortion in the AFE circuit directly correlate to decreased performance of the DMT ADSL modems. This is due, at least in part, to the fact that each frequency component in the spectrally rich ADSL signal inter-modulates all the other tones. With simple tones, such as relatively pure sine waves, non-linearities show up at discrete frequencies, in the form of harmonics. In the case of ADSL with its spectrally rich bandwidth, non-linearities and distortion in the AFE have the effect of producing additional noise, this time spread out over the entire 1.1 MHz spectrum. Non-linearity and distortion therefore have the effect of reducing the signal to noise ratio in each of the 200+ modem bands. Thus, such non-linearity rather than signal based noise may be the performance limiting factor for DMT ADSL signal transmission.

Conventional modem manufacturing operations typically use a functional test stage or quality screen at system test to establish the modem's ability to modulate and demodulate analog signals with the highest possible fidelity, prior to product shipment to the end user. For ADSL, these functional test stations must execute the required parametric test suite as described in ANSI T1.413 Issue 2 (1998). Further tests to evaluate modem performance are, however, also required. Such testing and evaluation of modem performance in a communications system are typically implemented using methods such as Bit Error Rate Testing (BERT) and Data Transmission (DT) testing.

ADSL modems, however, use several techniques to detect, correct and mask data transmission problems, which are usually caused by impairments or defects in the analog domain. The source side modem takes digital data and represents it in the analog domain. The corresponding receive modem takes this analog signaling, and reconstructs the original digital data stream. These techniques used in ADSL modems present a major challenge to BERT and Data Transmission test methods.

The conventional way to verify modem maximum data rate is using BERT. This involves training the modem under test to a reference modem through a maximum specified line length having noise impairments, then transmitting enough data to verify the BER, and thereby, the maximum data rate of the two modems used.

DMT ADSL modems naturally compensate for defects and impairments in the analog domain via training, reducing bit rates, eliminating DMT bins that are non-functional, and using built in error correction. One problem, however, is that in addition to compensating for defects and impairments in the analog domain, training also masks similar symptoms caused by improper analog board assembly and analog integration errors. Therefore, conventional testing using BERT is inadequate to detect functional operational errors for DMT ADSL, unless the errors are so gross as to substantially affect the basic data rate.

Total Harmonic Distortion (THD) testing has typically been used to quantify the linearity and distortion of the Analog Front End (AFE) modem circuits. The THD technique is implemented by applying a single tone to the modem input and then measuring the modem output signal which would thus include all distortion components. For single-carrier modem systems, this measurement technique is a reasonable approximation for the measurement of performance and operation of the analog side of the modems. ADSL DMT transmissions, however, use a multi-carrier signal. Thus, the THD and BERT techniques are not suitable for testing maximum modem performance.

DMT ADSL presents three problems when performing BERT testing: 1) The analog sources of defective DMT ADSL bins can be masked during training, making BERT a measure of the effective, rather than actual, error rate of the data pipe. 2) BERT requires a previously trained 'data pipe' which is up of two modems, and a physical link with impairments. BERT results measure the total network performance, not the specific modem under test. 3) DMT ADSL BERT failures cannot be resolved to a physical layer issue, specific bin or circuit component.

It would, therefore, be desirable to provide an alternative technique for testing ADSL DMT transmission circuits. It would also be desirable to provide a test technique which detects functional operational errors for DMT ADSL including errors caused by improper analog board assembly and analog integration errors. It would further be desirable to provide a technique for testing ADSL DMT transmission circuits at a rate which is compatible with production beat rates.

US 4,273,970 is a prior art document which discloses an intermodulation distortion test system which uses a three tone test signal, where the three tones have predetermined amplitude, frequency and phase relationships. The three tone test signal has a probability density function that is substantially Gaussian in order to reduce distortion product bandwidths.

WO 99/18701 discloses a digital subscriber line communication system that uses digital signal processing techniques to reduce susceptibility to distortion.

SUMMARY OF THE INVENTION

In one aspect the present invention provides a method for testing Asymmetric Digital Subscriber Loop (ADSL) Discrete Multi Tone (DMT) transmission circuits, the method comprising the steps of: applying a plurality of test tones in a DMT spectrum to a unit under test to generate a test result spectrum having a missing tone test result region and a tone test result region; and comparing the signal level of at least one signal in the missing tone test result region of the spectrum to the signal level of at least one other tone in the tone test result region of the spectrum.

In another aspect the present invention provides a system for testing a communication xDSL Discrete Multi Tone transmission circuit, the system comprising: means for applying a plurality of signals in a Discrete Multi Tone spectrum to a unit under test and for generating a test result spectrum having a missing tone test result region and a tone test result region; and means for comparing the signal level of a signal in a missing tone region of the spectrum to the signal level of at least one other signal in the tone test result region of the spectrum.

The method provides a new standard for performance testing of circuits which include Discrete Multi Tone (DMT) Asymmetric Digital Subscriber Loop (ADSL) technology. Furthermore the testing can be accomplished at production beat rates (i.e. the rate at which boards are produced on an assembly line, e.g. number of boards per hour). In one particular embodiment of the MTT technique, all tones in a DMT spectrum are applied to a unit under test (UUT) and one or more of the tones in the DMT spectrum is/are turned off. The test signals are generated by an Arbitrary Waveform Generator (AWG) or by the xDSL system depending upon whether the UUT is tested in a receive or a transmit mode of operation. An xDSL system using Discrete Multi-Tone (DMT) modulation is capable of generating individual carriers or bins or tones that are 4khz wide and each bin then carries a portion of the total data bits or symbols. The process of creating bins is done either with the use of DSPs or dedicated silicon engines. Thus, a digital signal processor (DSP) algorithm can be created that would selectively leave out a bin(s). In some chip sets this ability is internalized in the form of a Built-In Self Test (BIST) register.

Since the MTT technique utilizes tone manipulation, the technique is not dependent on the instrument hardware/software setups (e.g. a reference modem and a POTS circuit of choice can be used). Furthermore, new functions can be easily added to optimize measurement efficiency. Such functions can be implemented, for example, via computers (e.g. code segments or subroutines) written to test specific aspects of the UUT. It should be noted that each system user may emphasize different parametric tests for the same or different UUTs. Also, the MTT system is compatible with a dedicated graphical user interface (GUI) which simplifies the debug session by allowing manipulation of data and measurement parameters from a graphical instrument front panel. In one aspect of the graphical interface, data measured by a digitizer is processed via an Fourier Transform processing technique (e.g. an FFT) and is displayed on a display screen. The display screen has the look and feel of a spectrum analyzer and the user interfaces with the measure channel (DIG) graphically on the display screen through the GUI. Lastly, MTT allows testing at a very high test throughput to occur by supporting the testing of multiple lines concurrently and multiple dedicated DSP processors which perform data calculation under management of a main tester processor can be used to further minimize FFT computation time and thus increase test rates. MTT used at the circuit board level provides a relatively rapid and accurate means to establish the proper operation of DMT ADSL modems. The MTT technique is applied to predetermined integrated circuits and digital bits are sent into the AFE simulating a DMT engine. In this manner, the MTT technique can be used to evaluate DMT ADSL UUT actual potential data transmission rate, at production test beat rates. Missing Tone Testing of a modem is not fooled by modem training, bit rate reductions, turned off DMT bins or digital data correction. MTT therefore provides the most accurate view of the specific UUT modem actual performance. The ADSL functional test systems execute MTT, concurrently across multiple ADSL circuits, in seconds, making it ideal for high volume manufacturing. When testing the transmit side of the UUT, the xDSL system itself generates the plurality of test signals and instructions are provided to the xDSL system to indicate which of the plurality of test signals should be dropped out in accordance with the MTT technique. When testing the receive side of the UUT, the AWG receives instructions such that the AWG provided the plurality of test signals in accordance with the MTT technique. In both the transmit and receive cases, however, the results are examined by comparing the signal levels of the missing tone portions to the signal levels of the tone portions.

In a Missing Tone Test (MTT) system which applies fewer than all of the tones in a DMT spectrum to a unit under test and compares the signal level of a noise signal in a missing tone region of a measurement spectrum to the signal level of at least one other tone that is present in the measurement spectrum, circuit testing can be completed in the range of several to tens of seconds of test time (versus test times measured in minutes for conventional techniques) and thus can operate at a speed which is compatible with beat rate requirements for production testing of ADSL circuits.

To account for all the "noise" sources in the UUT, all tones used in the MTT technique generate THD, IMD, etc. The MTT system measures the signal level of noise in a missing tone relative to the signal levels of the tones that are present. In this manner, the technique allows relatively accurate measurement of multi-carrier systems.

Missing Tone Testing intentionally creates a null in the DMT spectrum. This can be accomplished, for example, by turning off one of the active tones while leaving all other tones active or by simply providing a plurality but less than all of the tones in the DMT spectrum. The particular tone or tones which are turned off are not critical to the success of the MTT technique. Similarly, the particular tones which are turned on are not critical to the success of the technique. The system and techniques of the present invention are suitable for use with all DSL (or xDSL) DMT systems. Furthermore, in principal the SNR concept can be used to test the CAP method.

In one embodiment the tones are applied sequentially to the UUT and then combined in a processor to implement the MTT technique. That is the tones can be applied sequentially rather than simultaneously. It should, however, be noted that the SNR test should preferably be done at full power signal level otherwise the worst case test may not be provided.

The 'notch' represented by the missing tone then fills up with the residual noise caused by the distortion and non-linearity of the AFE. This notch then provides a direct measurement of the noise floor of the AFE, caused by intermodulation characteristics of the AFE. Therefore, the relative amplitude of the distortion-created tone in the notch, compared to the signal levels of 'on' tones, is a measurement of actual modem performance and thus data rate. This measurement is made directly during the missing tone test.

MTT is thus a technique which provides independent assessment of modem under test (MUT) performance, in a test time that is compatible with a production environment. MTT measurements can be made either with or without line emulation and impairments. The product under test then is forced to generate the DMT signal with missing tones. A highly accurate digitizer captures the resultant signal and an FFT function is performed to complete the spectrum analysis.

BRIEF DESCRIPTION OF THE DRAWINGS

The foregoing features of the invention, as well as the invention itself may be more fully understood from the following detailed description of the drawings, in which:

FIG. 1 is a block diagram of a test system for performing a Missing Tone Test (MTT) on an Asymmetric Digital Subscriber Loop (ADSL) modems utilizing a Discrete Multi Tone (DMT) modulation technique;

FIG. 1A is a block diagram of a test system coupled to a device under test;

FIG. 2 is plot of frequency vs. power level for a system in which all signals in an entire DMT ADSL downstream frequency spectrum are provided;

FIG. 2A is a plot of frequency vs. power level for a system in which all signals in an entire DMT ADSL downstream frequency spectrum but one are provided;

FIG. 3 is a plot of frequency vs. power level for an entire DMT ADSL frequency spectrum;

FIG. 4 is a block diagram of a local central office connected to a home or office using twisted pair copper line;

FIG. 5 is a block diagram of a xDSL connection located at a central office;

FIG. 6 is a block diagram of a xDSL connection located at a remote site;

FIG. 7 is a plot of frequency vs. power level for an upstream and a downstream signal using frequency division multiplexing or echo cancellation;

FIG. 8 is a sketch of load card showing the form, fit and function connectivity; and

FIG. 9 is a sketch showing module slot plan and interconnects of the contemplated device.

DESCRIPTION OF THE PREFERRED EMBODIMENTS

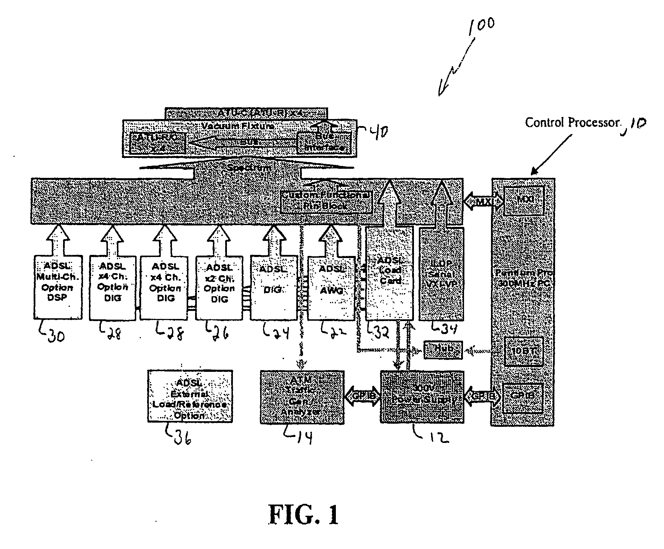

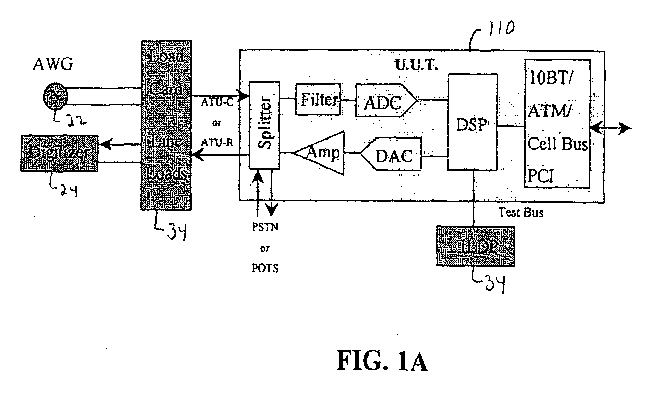

Referring now to FIG. 1, a test system 100 includes a control processor 10 which provides MXI, 10BaseT and GP IB ports. The control processor 10 may be provided, for example, as a microprocessor which operates with a clock speed of about 300 MHz. The control processor 10 is coupled to an optional 300 volt (V) power supply 12 through a GP IB bus. The optional power supply 12 allows testing of surge\lightning protection features of a Unit Under Test (UUT). An ATM traffic generator/analyzer 14 can be used to create ATM traffic for UUTs with ATM requirements. The ATM generator/analyzer 14 is integrated into a Spectrum Tester which may be provided, for example, as the type manufactured by Teradyne, Inc. 321 Harrsion Avenue, Boston MA 02118 and marketed under the product name Spectrum 8859 ADSL Tester, The Spectrum Tester. Those of ordinary skill in the art will appreciate of course that any ADSL tester having similar functional capabilities may also be used.

To perform a Missing Tone Test (MTT) on Asymmetric Digital Subscriber Loop (ADSL) modems utilizing a Discrete Multi Tone (DMT) modulation technique, the Spectrum Tester Architecture must be modified to include a source channel 22, here an arbitrary waveform generator (AWG), and a measure channel 24, here a digitizer. The source channel 22 provides signals having predetermined amplitudes and frequencies to a unit under test (UUT). The measure channel 24 measures the characteristics of the UUT in response to the signals provided by the source channel 22.

When performing MTT testing of a DMT xDSL circuit, the test signal corresponds to a signal which includes a plurality of tones but fewer than all of the tones in a DMT spectrum. The responses in the entire frequency ranges (both downstream and upstream) are then measured. This includes measurements in those frequency ranges in which the tones were not present as well as the frequency ranges in which the tones were present. Next, the measured response in the frequency range in which no tone was present is compared to the measured response in the frequency range in which the tone was present. Based on this comparison, characteristics of the UUT are determined to ensure the UUT meets specification.

Thus, a system 100 for testing a communication circuit is provided including: a load card having a first port coupled to said communication circuit; an arbitrary waveform generator (AWG) coupled to the communication circuit through said load card, said AWG for applying a plurality of signals in a DMT spectrum to the communication circuit; a digitizer coupled to said communication circuit through said load card, said digitizer for generating a test result spectrum having a missing tone test result region and a tone test result region; and a control processor for comparing the signal level of a signal in a missing tone region of the spectrum to the signal level of at least one other signal in the tone test result region of the spectrum to measure the characteristics of the communication board or UUT.

The system 100 can provide an ADSL conformance test to include a DC characterization of the analog (POTS) channel, voice band characterization, insertion loss, attenuation distortion, delay distortion, return loss, noise, other distortion and longitudinal balance. The system 100 can provide an ADSL performance test to include testing analog noise inserted into the ADSL band, testing analog noise across the ADSL band, checking all tones, testing the individual 4.3125 KHz subchannels, missing tone test and use SNR to determine maximum data rates.

In FIG. 1, the source channel 22 is provided from an arbitrary waveform generator (AWG) and the measure channel 24 is provided by a digitizer. The AWG and digitizer are commercially available components. The AWG and digitizer are coupled to the UUT through an ADSL Load Card 32. The load card 32, shown in more detailed in FIG. 8, is a switching matrix that connects the source and measure channels to the UUT. It provides test loads and termination to the UUT. The load card also provides line simulation and connections to external instruments and ATU-C/Rs (reference modems). The load card 32 uses interface and control circuitry based on spectrum channel card technology. It includes return/loss and longitudinal balance bridges for each channel including voice channels and ADSL band channels. The load card 32 provides terminations for each channel, AWG balanced inputs and digitizer balanced high impedance inputs. The load card 32 also provides zero and 12K feet line simulations per channel and includes an additional plug-in option for specific requirements.

The AWG 22 produces a plurality of user defined signal waveforms in response to control signals provided thereto. In a first operating mode in which the AWG 22 generates a test signal, the control signal can correspond to producing an FFT which has been computed and provided to the AWG 22 to provide a test signal having a specific frequency spectrum. In a second operating mode, the digitizer 24 receives signals from a UUT and performs an FFT to generate a full spectral view of the measure channel. The AWG 22 also allows full parametric measurements of the board under test to be made.

While testing the modem in a receive mode of operation, the test signals are generated by the AWG 22. Since an xDSL system using DMT modulation is capable of generating individual carrier bins or tones that are 4 Khz wide and each bin then carries a portion of the total data bit or symbols, however, while testing the modem in a transmit mode of operation the test signals are generated by the xDSL circuits. Thus, when testing the transmit mode of operation, it is not necessary to generate the test signals externally. The process of generating bins can be done either with the use of the DSP in the modem or with dedicated silicon engines.

When generating the signals via the DSP, an In Line Device Programming (ILDP) module 34 can be used. The ILDP module 34 may be provided for example as a programmable or configurable parallel or serial port. Through the ILDP module 34, a sequence can be transmitted to the DSP. The ILDP module 34 can thus define, for example, those pins which correspond to address pins, those pins which correspond to data pins, and those pins which correspond to control pins, etc.

Referring briefly to FIG. 1A, in those instances when the DSP is not directly accessible to the ILDP 34 and there is no other means to provide a relatively easy path to the DSP such that the DSP can generate tones, the DSP is programmed via an external algorithm. With this technique, the DSP can be programmed by signals fed through the communications port which allows transmission of signals via 10 BaseT, ATM, Cell Bus and PCI. The algorithm that causes the DSP to generate the tones will be board or chip set specific.

The test signals are thus either generated by the AWG 22 or by the xDSL system depending upon whether the UUT 110 is tested in a receive or a transmit mode of operation. An xDSL system using Discrete Multi-Tone (DMT) modulation is capable of generating individual carries or bins or tones that are 4khz wide and each bin then carries a portion of the total data bits or symbols. The process of creating bins is done either with the use of DSPs or dedicated silicon engines. Thus, a set of instructions (e.g. an algorithm) can be created that would selectively leave out one or more bin(s). In the case of chip sets from Analog Devices and Alcatel, for example, this ability is internalized in the form of a Built-In Self Test (BIST) register.

One important feature to thus consider in designing the board under test, is to design the board in such a way that the DSP or internal registers are accessible by the tester. This can be a dedicated test bus, an RS232 port, or a more indirect path through PCI or a proprietary bus. Naturally a dedicated test bus that accesses an internal BIST register would be much easier to program and control than loading DSP code through an indirect path such as through a communications or other I/O port of the board.

It should now be appreciated that the system 100 using MTT has four important advantages. It eliminates requirements for external reference modems, OEM data generator and standardized phone line. It directly measures the main property that determines modem bit error rates. It can eliminate training, BERT and data transmission times in production test. It can be run concurrently across multiple UUT's to provide a scaleable test solution.

Referring again to FIG. 1, the system 100 utilizes the features of the board under test and in particular the ability of the UUT to generate a full spectrum of DMT ADSL signals, such that the system acts as a virtual spectrum analyzer which controls input test signals and allows viewing of output test results. The system further includes a plurality of optional ADSL digitizers as shown by blocks 26, 28 labeled "ADSL x2 Ch. Option DIG." and "ADSL x4 Ch. Option DIG.", respectively. The channel extenders allow simultaneous digitizing of multiple channels.

An optional ADSL multichannel DSP 30 allows local processing of the test result signals measured by the test system. The ADSL multichannel DSP 30 helps reduce bottlenecks in off-line processing of test data. For example, assuming the FFT functions are performed by the control processor 10 (which may be provided as a personal computer PC for example), if there are 4 digitizers in the system the PC would have to time share between them to process their data. A local DSP can help with the data crunching and thus reduce the bottleneck. It should be noted that as processing speeds in PCs and other processors which can be used as controllers increase (e.g. 400+ MHz Pentium processors), the need for separate DSPs is lessening.

The ADSL External Load/Reference Option block 36 is intended to illustrate how an ADSL Load Card 32 can utilize external pieces of equipment. The load card allows the user to additionally use external equipment such as the DLS400 lines simulator or connection to a user specific modem.

The test system 100 interfaces to a board under test through a Vacuum Fixture 40. The board under test (i.e. the UUT) is coupled to the vacuum fixture and the bus interface.

The MTT has the advantage of directly and independently qualifying the analog-front-end section performance and thus overall UUT modem performance. Consider the ADSL modem. It starts with digital bits, creates the analog signal, transmits it, where it is received by a second modem which converts it back into bits. It should be appreciated that two basic data conversion principles apply. The first is the Nyquist principle that says if a signals bandwidth is limited to a value = BW, then perfectly precise samples taken at a Sampling Rate (SR) of $2^* $ BW will allow the original waveform to be reconstructed. The second principal is Shannon's law that says for every bit of resolution one gains 6dB of Signal-to-Noise (SNR) Ratio (actually 6.02 dB, "2:1"). In any communications system the maximum data rate is determined using Shannon law. Applying these two principles leads to the following simplified equations:

$$\text{Sampling Rate (SR) = 2 * BW} \qquad\qquad \text{Eq. 1}$$

$$\text{Bits / Sample = (SNR / 6)} \qquad\qquad \text{Eq. 2}$$

(Number of bits per second = number of bits per sample * number of samples per second). Combining (1) and (2) gives:

$$\text{Bits Per Second (BPS) = (SNR / 6) * (2 * BW)}$$

which equals

$$\text{BPS = (SNR * BW) / 3 or SNR = (3 * BPS) / BW}$$

Assuming a maximum data rate of 15Mbits per second (required for HDTV transmission) over the ADSL bandwidth of 1.1Mhz this gives an equivalent SNR of41db. Since the coding is not perfect a 24 dB guard band is added, which makes a total SNR of 65db (Guard banding is a recommendation from the ADSL Forum). Adding another 10 dB, as a test guard band gives a total of 75db. This value is the target used for the MTT test in the Spectrum 895x ADSL tester. **[0044]** We can also develop a relationship between SNR measured using missing tone and the equivalent Error Rate. For an ADSL signal the probability of error can be modeled as a Gaussian probability density function (Central limit Theory). Using a voltage difference of 2 between adjacent signal levels, the probability of error for a passband signal can be expressed as

$$P_e = 2/\sigma\sqrt{2\pi} \int_e -y^2/\sigma^2 \, dy$$

Integral evaluated from 1 to ∞
Where $\sigma^2$ is the variance of the noise. This can also be expressed as

$$P_e = 2/\sqrt{(2\pi)} \int_e -y^2/2 \, dy$$

Integral evaluated from $\sqrt{2}/\sigma$ to ∞
or

$$Q(\sqrt{2}/\sigma) = P_e = 2/\sqrt{(2\pi)} \int_e -y^2/2 \, dy$$

Note there is no closed form solution for the above integral. It can be solved using numerical methods or using math tables. From the above equation one can see that the inverse of the noise power is the inverse function of the error probability.

$$2/\sigma^2 = Q^{-1}(P_e)$$

or

$$1//\sigma^2 = [Q^{-1}(P_e)]/2$$

Now considering the average signal power

$$[2(2^{2n}-1)]/3 \text{ where } n = \text{the constellation size index}$$

The required SNR is

$$\{[2(2^{2n}-1)]/3\} * [Q^{-1}(P_e)]^2$$

The following table shows the required SNR for different constellation sizes and error rates.

| Bit Error rate(db) | | Constellation size ($2^n$) | | | | |
|---|---|---|---|---|---|---|
| | | 4 | 16 | 64 | 256 | 1024 |
| $10^{-6}$ | | 13.7 | 20.7 | 26.9 | 33.0 | 39.0 |
| $10^{-7}$ | | 14,6 | 21.6 | 27.8 | 33.9 | 39.9 |
| $10^{-8}$ | | 15.2 | 22.2 | 28.4 | 34.5 | 40.5 |

The Missing Tone Test (MTT) technique allows for a direct parametric measurement of modem performance and operation. It provides a more accurate measurement of DMT multi-carrier systems because it measures modem performance under worst case 'all tones on' conditions. MTT is a measurement of signal levels and noise components in a single 'missing tone' relative to all tones on DMT spectrum. The signal level in the missing tone is made up of two major components: Noise and nonlinearity effects from the analog amplifier sections, and spectral side tones and mixing products from adjacent carriers. The key limitation of the DMT modem, comprised of 200+ individual single-carrier modems spread out over 1.1 MHz band, is non-linearity and distortion in the AFE (analog front end) circuitry. The AFE section amplifiers, receivers and other components drive and receive the analog domain DMT signals. Performance issues, non-linearity and distortion in AFE circuit directly correlate to decreased performance of the ADSL DMT modem. Each frequency component in the spectrally rich ADSL signal inter-modulates all the other tones. With simple tones, such as sine waves, non-linearity shows up at discrete frequencies, in the form of harmonics. In the case of ADSL with its spectrally rich bandwidth, non-linearity and distortion in the AFE have the effect of producing additional noise from all carrier tones, and will appear as a uniform noise floor over the entire 1.1 MHz spectrum. AFE non-linearity and distortion have the effect of reducing the dynamic signal to noise ratio in each of the 200+ modem bands, and in turn, reducing the capacity of the modem to transmit data at specified BER (bit error rates).

MTT measurements can be made with or without line emulation and impairments. The product under test then is forced to generate the DMT signal with missing tones. A highly accurate digitizer captures the resultant signal and a FFT function is performed to complete the spectrum analysis. The relative amplitude of the noise and distortion measured in the missing tone compared to the signal levels of 'on' tones, is the key measurement of actual modem performance and data rate. The missing tone measurement can also be correlated directly to Bit Error Rates (BER), and eliminate the requirement for a separate BERT test to be performed on every modem in production, saving significant test time.

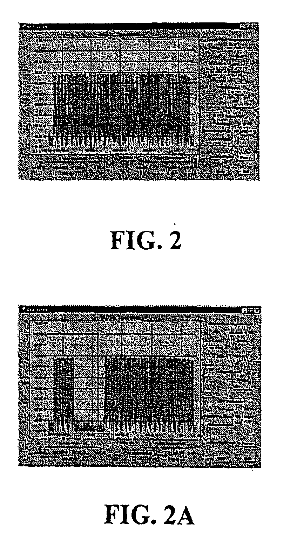

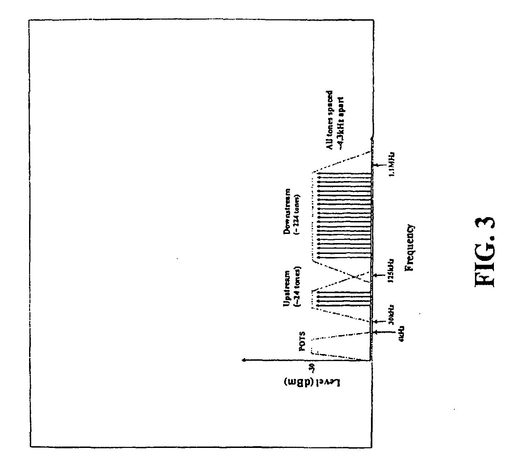

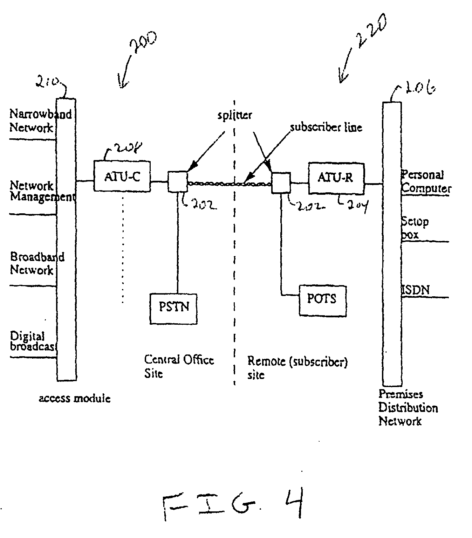

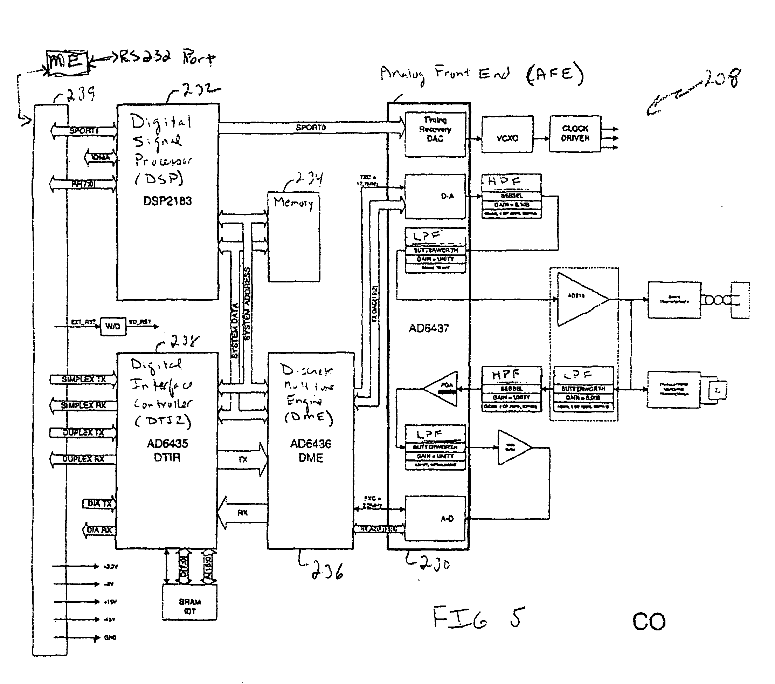

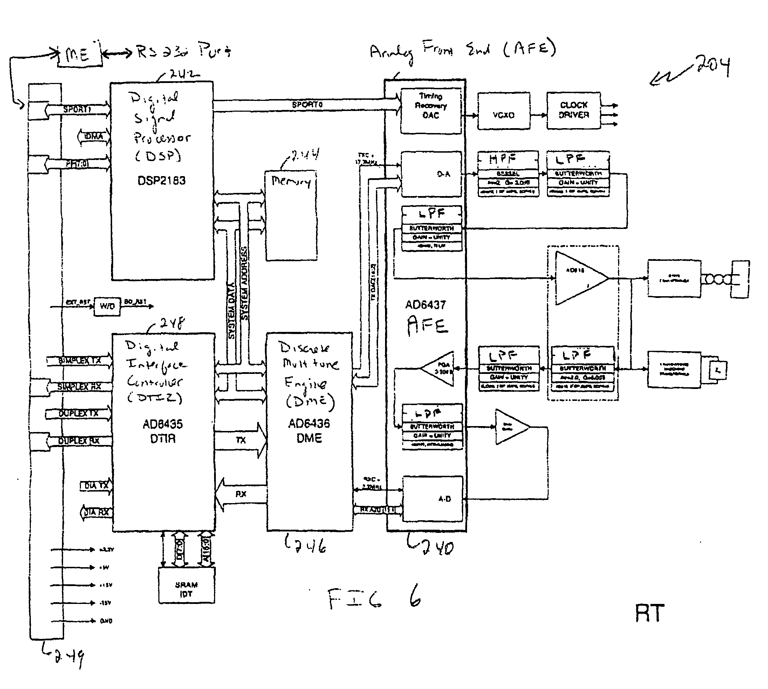

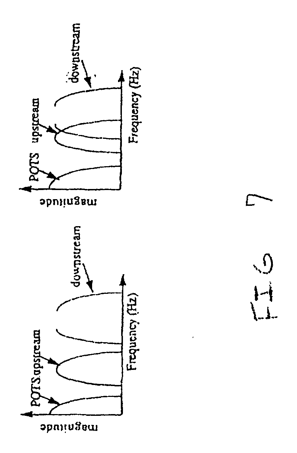

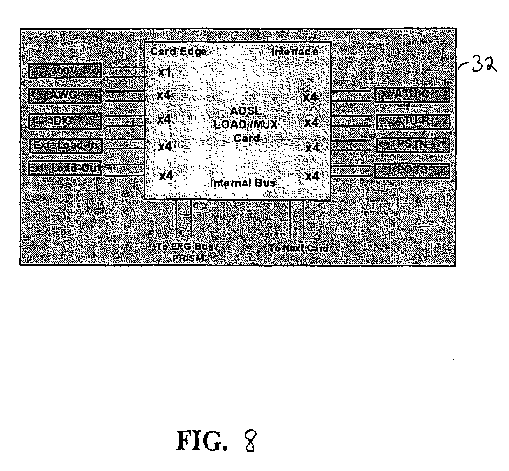

Referring now to FIGs. 2 and 2A, two frequency spectrums are shown. FIG. 2 is a plot of frequency vs. power level for a system in which all signals in an entire DMT ADSL downstream frequency spectrum are provided while FIG. 2A is a plot of frequency vs. power level for a system in which all signals in an entire DMT ADSL downstream frequency spectrum except for a portion are provided.

When testing the transmit side of the UUT, the xDSL system itself generates the plurality of test signals (i.e. the DMT ADSL signals) and instructions are provided to the xDSL system to indicate which of the plurality test signals should be dropped out in accordance with the MTT technique. When testing the receive side of the UUT, the AWG 22 receives instructions such that the AWG 22 provides the plurality of test signals in accordance with the MTT technique. In both the transmit and receive cases, however, the results are examined by comparing the signal levels of the missing tone portions to the signal levels of the tone portions to determine the characteristics of the UUT.

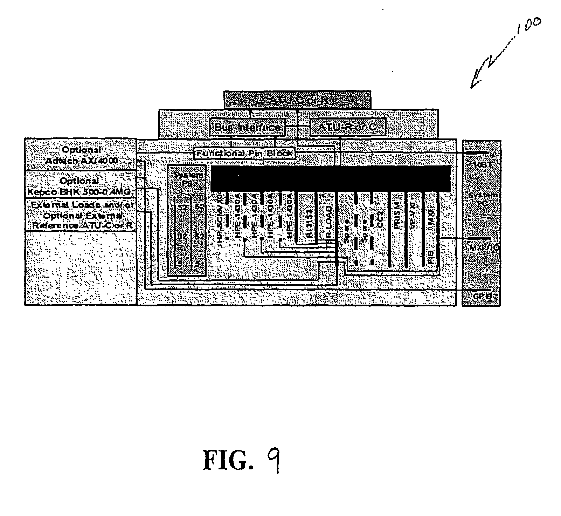

Referring now to FIG. 3, a plot of frequency vs. power level for an entire DMT ADSL frequency spectrum is shown. Any of the upstream or downstream tone lines shown in FIG. 3 can be omitted to perform testing in accordance with the MTT technique. Furthermore, the testing can be done sequentially or in total across the spectrum.

Referring now to FIG. 4, a local central office 200 is shown connected to a home or office 220 with twisted pair copper line using an xDSL modem 204. In the embodiment shown, a subscriber line is passed through a splitter 202 to segregate out voice subscriber circuits from the central office to the home or office 220. The xDSL modem 204 connects the central office to the premises distribution network 206 where user services are provided. A central office modem 208 interfaces through the access module 210 to the central office 200 accordingly. Digital services which the subscriber wishes to access are connected through the access module 210 to the modem 208. The data entering the modem 208 is multiplexed into two data buffers. Cyclic redundancy check, scrambling and error correction is performed on each of the buffers. The data is then tone ordered and combined into a data symbol. This symbol is input to a constellation encoder and modulated to produce an analog signal. The data from the modem 208 (downstream) and the data from the modem 204 (upstream) may be kept separate by using either frequency division multiplexing (see FIG. 7 where downstream and upstream spectra do not overlap) or by using echo cancellation. Use of echo cancellation allows the upstream and downstream spectra to overlap permitting more bandwidth (see FIG. 7). In either case no frequencies below 24 KHz are used, allowing a 20KHz guardband between the voiceband and the ADSL signal. FIG. 7 is a plot of frequency vs. power level for an upstream and a downstream signal signal flow for the spectrum of the ADSL and analog voice (POTS) signals. The voice over data signal is carried over copper twisted pair between the central office 200 and the customer premises 220 to the splitter 202. The splitter 202 has low pass and high pass filters that separate the voice and data signals.

Referring now to FIG. 5, a block diagram of central office modem 208 is shown. An analog front end (AFE) 230 is coupled to twisted pair wire to connect the central office to a remote site. A digital signal processor 232 is connected to the AFE 230 to provide the requisite timing and control signals in accordance with the control methodolgy as stored in memory 234. A discrete multitone engine 236 provides the necessary analog tones to the AFE 230 in response to the digital interface controller 238 and responds from the AFE 230 to produce the necessary digital signals. An interface bus 239 provides the requisite data, address and control signals to the modem 208 in a known manner. It should be appreciated such a device can be tested using the MTT techniques as described.

Referring now to FIG. 6, a block diagram of remote site modem 204 is shown. An analog front end (AFE) 240 is coupled to twisted pair wire to connect the central office to the remote site. A digital signal processor 242 is connected to the AFE 240 to provide the requisite timing and control signals in accordance with the control methodolgy as stored in memory 244. A discrete multitone engine 246 provides the necessary analog tones to the AFE 240 in response to the digital interface controller 248 and responds from the AFE 240 to produce the necessary digital signals. An interface bus 249 provides the requisite data, address and control signals to the modem 204 in a known manner. It should be appreciated such a device can be tested using the MTT techniques as described.

FIG. 9 is a sketch of a test system 100 showing module slot plan and interconnects of the contemplated device.

As described the system 100 using MTT has four significant advantages: MTT is not dependent on carefully characterized external reference modems and signal paths to perform functional testing. The UUT modem is measured directly to eliminate other sources of potential error. Secondly MTT is a parametric measurement of the key property affecting both BERT and maximum data transmission rates: the noise floor caused by dynamic operation of the modem (AFE operation/performance). Thirdly MTT can replace modem training, BERT and data transmission tests, reducing modem functional test times and ATE capital equipment requirements. Finally, concurrent MTT tests can easily be performed on multiple UUT's to provide low cost, scaleable test strategies for production environments.

As indicated heretofore, aspects of this invention pertain to specific "method functions" implementable on computer systems. Those skilled in the art should readily appreciate that programs defining these functions can be delivered to a computer in many, forms; including, but not limited to: (a) information permanently stored on non-writable storage media (e.g., read only memory devices within a. computer or CD-ROM disks readable by a computer I/O attachment); (b) information alterably stored on writable storage media (e.g., floppy disks and hard drives); or (c) information conveyed to a computer through communication media such as telephone networks. It should be understood, therefore, that such media, when carrying such information, represent alternate embodiments of the present invention. All documents referred to herein are hereby incorporated herein by reference in their entirety.

Having described preferred embodiments of the invention, it will now become apparent to one of ordinary skill in the art that other embodiments incorporating their concepts may be used.

**Claims**

1.    A method for testing Asymmetric Digital Subscriber Loop Discrete Multi Tone transmission circuits, the method comprising the steps of:

applying a plurality of test tones in a Discrete Multi Tone spectrum to a unit under test (110) to generate a test result spectrum having a missing tone test result region and a tone test result region; and

comparing the signal level of at least one signal in the missing tone test result region of the spectrum to the signal level of at least one other tone in the tone test result region of the spectrum.

2.    The method of Claim 1 wherein the step of applying a plurality of the test tones in a Discrete Multi Tone spectrum to the unit under test comprises the step of applying all test tones in a Discrete Multi Tone spectrum except for one to the unit under test (110).

3. The method of Claim I wherein in the step of applying a plurality of the test tones comprises the step of generating the plurality of test tones in an Arbitrary Waveform Generator (22).

4. The method of Claim 1 wherein the step of applying a plurality of the test tones comprises the step of generating the plurality of test tones using a Digital Subscriber Loop system using Discrete Multi-Tone Modulation.

5. The method of Claim 3 or 4 wherein the step of generating the plurality of test tones comprises the step of generating the plurality of test tones sequentially.

6. The method of Claim 3 or 4 wherein the step of generating the plurality of test tones comprises the step of producing a plurality of user defined signal waveforms in response to control signals.

7. The method of Claim 6 wherein the control signal corresponds to producing a Fast Fourier Transform which has been computed to provide a plurality of test tones having a specific frequency spectrum.

8. A system (100) for testing a communication Digital Subscriber Loop Discrete Multi Tone transmission circuit, the system comprising:

   means (22, 236) for applying a plurality of signals in a Discrete Multi Tone spectrum to a unit under test (110) and for generating a test result spectrum having a missing tone test result region and a tone test result region; and
   means (24) for comparing the signal level of a signal in a missing tone region of the spectrum to the signal level of at least one other signal in the tone test result region of the spectrum.

9. The system of Claim 8 wherein said means (22) for applying a plurality of signals in a Discrete Multi Tone spectrum to the unit under test (110) comprises an Arbitrary Waveform Generator.

10. The system of Claim 8 wherein said means (22) for applying a plurality of signals in a Discrete Multi Tone spectrum to the unit under test (110) comprises means for generating the plurality of test tones with a Digital Subscriber Loop system using Discrete Multi-Tone Modulation.

11. The system of Claim 10 wherein said means (22) for applying a plurality of signals in a Discrete Multi Tone spectrum to the unit under test (110) comprises a digital signal processor (232, 242) configured to provide a control signal to control the generation of the plurality of signals.

12. The system of Claim 1 wherein said control signal corresponds to producing a Fast Fourier Transform which has been computed and provided to provide a plurality of signals having a specific frequency spectrum.

13. The system of Claim 11 wherein said digital signal processor (22) is programmed using an external algorithm.

14. The system of claim 9 wherein said means for generating a test result spectrum having a missing tone test result region and a tone test result region comprises a digitizer (24).

15. The system of Claim 14 further comprising:

   a load card (32) having a first port coupled to said communication circuit;
   and wherein the arbitrary waveform generator is coupled to the communication circuit through said load card; and
   the digitizer (24) is coupled to said communication circuit through said load card (32).

16. The system of Claim 15 wherein the means (24) for comparing the signal level of a signal in a missing tone region of the spectrum to the signal level of at least one other signal in the tone test result region of the spectrum comprises a digital signal processor.

17. The system of Claim 15 comprising a digital signal processor (232, 242) and wherein said arbitrary waveform generator (22) for providing a plurality of signals in a Discrete Multi Tone spectrum to the communication circuit is controlled by a control signal from the digital signal processor.

18. The system of Claim 17 wherein said digital signal processor (232, 242) comprises a set of instructions configured to control the control signal to selectively leave out one or more signals in a Discrete Multi Tone spectrum.

19. The system of Claim 16 wherein said digital signal processor (232, 242) comprises a set of instructions to provide the characteristics of the communication circuit or unit under test in response to the signal level of a signal in a missing tone region of the spectrum compared to the signal level of at least one other signal in the tone test result region of the spectrum.

**Patentansprüche**

1. Verfahren zum Testen von ADSL-(Asymmetric Digital Subscriber Loop)-DMT-(Multiträgerübertragung)-Schaltungen, das die folgenden Schritte umfasst:

    Anlegen einer Mehrzahl von Testtönen in einem DMT-Spektrum an einen Prüfling (110) zum Erzeugen eines Testergebnisspektrums mit einer Fehltontestergebnisregion und einer Tontestergebnisregion; und

    Vergleichen des Signalpegels von wenigstens einem Signal in der Fehltontestergebnisregion des Spektrums mit dem Signalpegel von wenigstens einem anderen Ton in der Tontestergebnisregion des Spektrums.

2. Verfahren nach Anspruch 1, wobei der Schritt des Anlegens einer Mehrzahl der Testtöne in einem DMT-Spektrum an den Prüfling den Schritt des Anlegens aller Testtöne in einem DMT-Spektrum umfasst, mit Ausnahme von einem zu dem Prüfling (110).

3. Verfahren nach Anspruch 1, wobei der Schritt des Anlegens einer Mehrzahl der Testtöne den Schritt des Erzeugens der Mehrzahl von Testtönen in einem ARB-Generator (22) umfasst.

4. Verfahren nach Anspruch 1, wobei der Schritt des Anlegens einer Mehrzahl der Testtöne den Schritt des Erzeugens der Mehrzahl von Testtönen mit einem DSL-(Digital Subscriber Loop)-System unter Anwendung von DMT-Modulation umfasst.

5. Verfahren nach Anspruch 3 oder 4, wobei der Schritt des Erzeugens der Mehrzahl von Testtöne den Schritt des Erzeugens der Mehrzahl von Testtönen sequentiell umfasst.

6. Verfahren nach Anspruch 3 oder 4, wobei der Schritt des Erzeugens der Mehrzahl von Testtönen den Schritt des Erzeugens einer Mehrzahl von anwenderdefinierten Signalwellenformen als Reaktion auf Steuersignale umfasst.

7. Verfahren nach Anspruch 6, wobei das Steuersignal dem Erzeugen einer Fast-Fourier-Transformation entspricht, die zum Erzeugen einer Mehrzahl von Testtönen mit einem bestimmten Frequenzspektrum errechnet wurde.

8. System (100) zum Testen einer ADSL-(Asymmetric Digital Subscriber Loop)-DMT-(Multiträgerübertragung)-Kommunikationsschaltung, wobei das System Folgendes umfasst:

    Mittel (22, 236) zum Anlegen einer Mehrzahl von Signalen in einem DMT-Spektrum an einen Prüfling (110) und zum Erzeugen eines Testergebnisspektrums mit einer Fehltontestergebnisregion und einer Tontestergebnisregion; und

    Mittel (24) zum Vergleichen des Signalpegels eines Signals in einer Fehltonregion des Spektrums mit dem Signalpegel von wenigstens einem anderen Signal in der Tontestergebnisregion des Spektrums.

9. System nach Anspruch 8, wobei das Mittel (22) zum Anlegen einer Mehrzahl von Signalen in einem DMT-Spektrum an den Prüfling (110) einen ARB-Generator umfasst.

10. System nach Anspruch 8, wobei das Mittel (22) zum Anlegen einer Mehrzahl von Signalen in einem DMT-Spektrum an den Prüfling (110) Mittel zum Erzeugen der Mehrzahl von Testtönen mit einem DSL-(Digital Subscriber Loop)

**EP 1 095 480 B1**

-System unter Anwendung von DMT-Modulation umfasst.

**11.** System nach Anspruch 10, wobei das Mittel (22) zum Anlegen einer Mehrzahl von Signalen in einem DMT-Spektrum an den Prüfling (110) einen Digitalsignalprozessor (232, 242) umfasst, der so konfiguriert ist, dass er ein Steuersignal zum Steuern der Generation der Mehrzahl von Signalen erzeugt.

**12.** System nach Anspruch 11, wobei das Steuersignal dem Erzeugen einer Fast-Fourier-Transformation entspricht, die zum Erzeugen einer Mehrzahl von Signalen mit einem bestimmten Frequenzspektrum errechnet wurde.

**13.** System nach Anspruch 11, wobei der Digitalsignalprozessor (22) mit einem extemen Algorithmus programmiert ist.

**14.** System nach Anspruch 9, wobei das Mittel zum Erzeugen eines Testergebnisspektrums mit einer Fehltontestergebnisregion und einer Tontestergebnisregion einen Digitalisierer (24) umfasst.

**15.** System nach Anspruch 14, das ferner Folgendes umfasst:

eine Ladekarte (32) mit einem ersten Port, der mit der Kommunikationsschaltung gekoppelt ist;
und wobei der ARB-Generator mit der Kommunikationsschaltung durch die Ladekarte gekoppelt ist; und
der Digitalisierer (24) mit der Kommunikationsschaltung durch die Ladekarte (32) gekoppelt ist.

**16.** System nach Anspruch 15, wobei das Mittel (24) zum Vergleichen des Signalpegels eines Signals in einer Fehltonregion des Spektrums mit dem Signalpegel von wenigstens einem anderen Signal in der Tontestergebnisregion des Spektrums einen Digitalsignalprozessor umfasst.

**17.** System nach Anspruch 15, umfassend einen Digitalsignalprozessor (232, 242) und wobei der ARB-Generator (22) zum Erzeugen einer Mehrzahl von Signalen in einem DMT-Spektrum zu der Kommunikationsschaltung durch ein Steuersignal von dem Digitalsignalprozessor gesteuert wird.

**18.** System nach Anspruch 17, wobei der Digitalsignalprozessor (232, 242) einen Satz von Befehlen umfasst, die zum Steuern des Steuersignals konfiguriert sind, um selektiv ein oder mehrere Signale in einem DMT-Spektrum auszulassen.

**19.** System nach Anspruch 16, wobei der Digitalsignalprozessor (232, 242) einen Satz von Befehlen umfasst, um die Charakteristiken der Kommunikationsschaltung oder des Prüflings als Reaktion auf den Signalpegel eines Signals in einer Fehltonregion des Spektrums im Vergleich zu dem Signalpegel von wenigstens einem anderen Signal in der Tontestergebnisregion des Spektrums bereitzustellen.

**Revendications**

**1.** Procédé pour tester des circuits de transmission à multiples tonalités discrètes à boucle d'abonné numérique asymétrique, le procédé comprenant les étapes de:

application d'une pluralité de tonalités de test selon un spectre à multiples tonalités discrètes sur une unité sous test (110) afin de générer un spectre de résultat de test comportant une région de résultat de test de tonalité manquante et une région de résultat de test de tonalité; et

comparaison du niveau de signal d'au moins un signal dans la région de résultat de test de tonalité manquante du spectre avec le niveau de signal d'au moins une autre tonalité dans la région de résultat de test de tonalité du spectre.

**2.** Procédé selon la revendication 1, dans lequel l'étape d'application d'une pluralité de tonalités de test selon un spectre à multiples tonalités discrètes sur l'unité sous test comprend l'étape d'application de toutes les tonalités de test selon un spectre à multiples tonalités discrètes à l'exception d'une sur l'unité sous test (110).

**3.** Procédé selon la revendication 1, dans lequel l'étape d'application d'une pluralité des tonalités de test comprend l'étape de génération de la pluralité de tonalités de test dans un générateur de forme d'onde arbitraire (22).

**4.** Procédé selon la revendication 1, dans lequel l'étape d'application d'une pluralité des tonalités de test comprend l'étape de génération de la pluralité de tonalités de test en utilisant un système à boucle d'abonné numérique qui utilise une modulation à multiples tonalités discrètes.

**5.** Procédé selon la revendication 3 ou 4, dans lequel l'étape de génération de la pluralité de tonalités de test comprend l'étape de génération de la pluralité de tonalités de test de façon séquentielle.

**6.** Procédé selon la revendication 3 ou 4, dans lequel l'étape de génération de la pluralité de tonalités de test comprend l'étape de production d'une pluralité de formes d'onde de signal définies par utilisateur en réponse à des signaux de commande.

**7.** Procédé selon la revendication 6, dans lequel le signal de commande correspond à la production d'une transformation de Fourier rapide qui a été calculée pour produire une pluralité de tonalités de test présentant un spectre de fréquences spécifique.

**8.** Système (100) pour tester un circuit de transmission à multiples tonalités discrètes à boucle d'abonné numérique de communication, le système comprenant:

un moyen (22, 236) pour appliquer une pluralité de signaux selon un spectre à multiples tonalités discrètes sur une unité sous test (110) et pour générer un spectre de résultats de test comportant une région de résultat de test de tonalité manquante et une région de résultat de test de tonalité; et
un moyen (24) pour comparer le niveau de signal d'un signal dans une région de tonalité manquante du spectre avec le niveau de signal d'au moins un autre signal dans la région de résultat de test de tonalité du spectre.

**9.** Système selon la revendication 8, dans lequel ledit moyen (22) pour appliquer une pluralité de signaux selon un spectre à multiples tonalités discrètes sur l'unité sous test (110) comprend un générateur de forme d'onde arbitraire.

**10.** Système selon la revendication 8, dans lequel ledit moyen (22) pour appliquer une pluralité de signaux selon un spectre à multiples tonalités discrètes sur l'unité sous test (110) comprend un moyen pour générer la pluralité de tonalités de test avec un système à boucle d'abonné numérique qui utilise une modulation à multiples tonalités discrètes.

**11.** Système selon la revendication 10, dans lequel ledit moyen (22) pour appliquer une pluralité de signaux selon un spectre à multiples tonalités discrètes sur l'unité sous test (110) comprend un processeur de signal numérique (232, 242) qui est configuré pour produire un signal de commande afin de commander la génération de la pluralité de signaux.

**12.** Système selon la revendication 11, dans lequel ledit signal de commande correspond à la production d'une transformation de Fourier rapide qui a été calculée et appliquée pour produire une pluralité de signaux présentant un spectre de fréquences spécifique.

**13.** Système selon la revendication 11, dans lequel ledit processeur de signal numérique (22) est programmé en utilisant un algorithme externe.

**14.** Système selon la revendication 9, dans lequel ledit moyen pour générer un spectre de résultats de test comportant une région de résultat de test de tonalité manquante et une région de résultat de test de tonalité comprend un numériseur (24).

**15.** Système selon la revendication 14, comprenant en outre:

une carte de charge (32) qui comporte un premier port qui est couplé audit circuit de communication; et

dans lequel le générateur de forme d'onde arbitraire est couplé au circuit de communication par l'intermédiaire de ladite carte de charge; et

le numériseur (24) est couplé audit circuit de communication par l'intermédiaire de ladite carte de charge (32).

**16.** Système selon la revendication 15, dans lequel le moyen (24) pour comparer le niveau de signal d'un signal dans une région de tonalité manquante du spectre au niveau de signal d'au moins un autre signal dans la région de résultat de test de tonalité du spectre comprend un processeur de signal numérique.

**17.** Système selon la revendication 15, comprenant un processeur de signal numérique (232, 242) et dans lequel ledit générateur de forme d'onde arbitraire (22) pour produire une pluralité de signaux selon un spectre à multiples tonalités discrètes sur le circuit de communication est commandé par un signal de commande en provenance du processeur numérique.

**18.** Système selon la revendication 17, dans lequel ledit processeur de signal numérique (232, 242) comprend un jeu d'instructions qui est configuré pour commander le signal de commande afin d'exclure de façon sélective un ou plusieurs signaux dans un spectre à multiples tonalités discrètes.

**19.** Système selon la revendication 16, dans lequel ledit processeur de signal numérique (232, 242) comprend un jeu d'instructions pour produire les caractéristiques du circuit de communication ou de l'unité sous test en réponse au niveau de signal d'un signal dans une région de tonalité manquante du spectre par comparaison avec le niveau de signal d'au moins un autre signal dans la région de résultat de test de tonalité du spectre.

**FIG. 1**

FIG. 1A

FIG. 2

FIG. 2A

FIG. 3

FIG. 4

EP 1 095 480 B1

FIG 5    CO

FIG 6

ME ↔ RS 232 Port
Analog Front End (AFE)
204

Digital Signal Processor (DSP) — DSP2183 — 242
Memory — 244
SPORT1 / SPORT0 / DMA / PF[7:0]

Timing Recovery DAC
VCXO
CLOCK DRIVER

TRC 17.7MHz
D-A
HPF BESSEL — LPF BUTTERWORTH GAIN = UNITY
LPF BUTTERWORTH GAIN = UNITY

AD6437 AFE — 240

ext_RST — W/D — BD_RST

Digital Interface Controller (DTIR) — AD6435 DTIR — 248
Discrete Multitone Engine (DME) — AD6436 DME — 246

SIMPLEX TX / SIMPLEX RX / DUPLEX TX / DUPLEX RX
DIA TX / DIA RX

TX / RX

SYSTEM DATA / SYSTEM ADDRESS

AD818
PGA
LPF BUTTERWORTH GAIN = UNITY
LPF BUTTERWORTH

SRAM IDT

+3.3V / +5V / +15V / -15V / GND

249

RT

EP 1 095 480 B1

21

FIG 7

EP 1 095 480 B1

FIG. 8

FIG. 9